# EUROPEAN PATENT APPLICATION

(11) **EP 1 471 442 A1**
(43) Date of publication of application: **27.10.2004**
(21) Application number: 03252614.7
(22) Date of filing: 25.04.2003
(51) Int. Cl.: G06F 17/30, G06F 1/00, H04L 29/06

(54) **Digital document distribution systems**

(71) Applicant: AnyDoc Limited, London E1 8DA (GB)
(72) Inventor: AnyDoc Limited, London E1 8DA (GB)
(74) Representative: Cooper, John

(57) **Abstract**

Systems for digital document distribution include one or more of: at least one management server; at least one client terminal; and a plurality of document servers. These components can be provided together as part of a data communications network. The management server receives and authenticates a log in request from a client terminal, retrieves a list of client-associated documents from the document servers, and provides said list to that terminal. The client terminal then sends a document request to the management server, which sends to the client terminal the identity of the document server storing the requested document. The client terminal then retrieves the requested document from the identified document server.

## Description

The present invention concerns systems for distributing digital documents via data communications networks.

As used herein, the term "digital document" means a digital representation of any type of data processed by a data processing system which is intended, ultimately, to be output in some form, in whole or in part, to a human user, typically by being displayed or reproduced visually (e.g. by means of a visual display unit or as hard copy). For the purposes of the present invention, the content of a digital document will typically comprise text and or graphical elements, but is not limited thereto.

Data processing technology facilitates the collation of large quantities of data into documents that are transmitted to end users. For example, in the financial services industries, utility industries and the like, data has to be collated into regular statements, accounts etc. and sent to customers. Generally speaking, such statements and the like are still output as hard copy and sent to customers by conventional mail. Sophisticated data processing systems are required not only for generating the documents with the correct content, but also for managing the process of printing and distributing hard copies.

Modern data communications networks, including the internet and world wide web, make it possible for many types of documents to be distributed digitally rather than as hard copy, potentially providing significant cost savings for businesses generating and distributing the documents and greater convenience for end users. The potential also exists for users to manage their affairs "on-line", including the payment of bills, for example. However, the take-up of these kinds of on-line services has, to date, been relatively low.

The present invention seeks to provide systems and methods that facilitate the distribution of digital documents to end users and other types of on-line services.

In its various aspects, the present invention provides a management server, client terminal and document server, and a data communications network comprising such servers and terminals, as defined in the claims appended hereto.

Embodiments of the invention will now be described, by way of example only, with reference to the accompanying drawings, in which:
Fig. 1 is a block diagram illustrating a data communications network implementing one embodiment of the present invention;
Fig. 2 is a transaction diagram illustrating a client login procedure for use in preferred embodiments of the present invention;
Fig. 3 is a transaction diagram illustrating a client document request procedure for use in preferred embodiments of the present invention.

Before describing the preferred embodiments in detail, a number of terms used in the present description will be defined:
"Client" means an end user of the services provided by the invention, typically a customer of one or more businesses who employ the services provided by the invention. Clients may be private individuals or companies etc.
"Management agency" means a centralised agency that manages the operation of the services provided by the invention. "Management server" means a server or group of servers operated by the management agency for implementing the services provided by the invention.
"Certified partner" means a business having a formal arrangement with the management agency to use the services provided by the invention for communicating with its customers who are also clients registered with the management agency.
"Third party authenticator" means a business that does not have a formal arrangement with the management agency but which employs client authentication processes provided by the management agency (this constitutes a preferred but optional extension of the core services provided by the invention).
"Client terminal" means any type of network device, including wireless devices, used by a client to access a data communications network for the purposes of the invention. It may, for example, be any suitable type of personal computer (desktop, laptop, palmtop) or network terminal, a smart telephone, digital assistant or web-enabled television. Depending upon the manner in which the invention is implemented, the client software may comprise one or more application-specific programs and/or a conventional internet browser. Except where stated otherwise, the following description assumes the use of at least one application-specific client program.

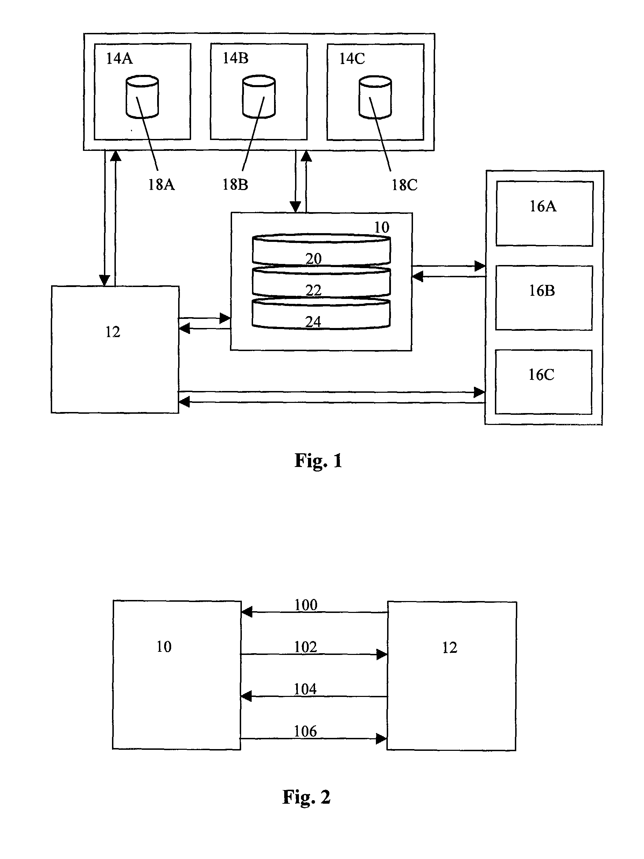

Referring now to Fig. 1 of the drawings, a management agency 10 communicates via any suitable data communications channels, as illustrated by the arrows, with a plurality of clients 12, a plurality of certified partners 14A, 14B, 14C (such as telecommunications service providers, utility service providers (e.g. gas/electricity), financial service providers or other service companies), and a plurality of third party authenticators 16A, 16B and 16C (typically on-line retail shops and stores). Clients 12 also communicate directly (via the relevant network architectures and protocols) with the certified partners 14 and/or third party authenticators 16.

Each of the certified partners 14 operates its own document server 18A, 18B, 18C, storing digital documents that are to be made available to clients 12. The management agency 10 manages client registration and authentication, and client access to the documents stored on the document servers 18. For this purpose, the management agency may typically operate a registration server 20, central management server 22 and account server 24, referred to herein collectively as the management server (10), which term embraces other arrangements of one or more servers configured to provide the functionality described. In general terms, the system allows documents to be indexed and stored and to be made available to clients. The document servers 18 can be located anywhere on, for example, the internet.

Clients must first register and create an account with the management agency. Registration can be a substantially conventional on-line registration process, in which the client provides the management agency with user names and contact details and any other information required to authenticate the identity of the client. The client selects or is allocated a password and may optionally provide additional security information, such as mother's maiden name and/or date of birth. Such additional security information may be required for subsequently logging in to the system, at the option of the user, and/or may be used to verify the identity of the client, for example, if a password is lost or forgotten. The management server allocates a unique identification number (user ID, typically an alphanumeric character string) to the client and maintains a database of client account details.

The registration process and account details may be slightly different for private individuals and companies, for example. A company account may require enhanced security options and/or the facility for multiple users to log in. This may involve the creation of a main administration account for the company and sub-accounts for individual users, with different user IDs and passwords etc.

Certified partners may also create accounts on behalf of their existing customers and offer those customers the option of using the account instead of receiving statements etc. by conventional mail. If a customer wishes to make use of this facility they must first activate their "pre-issued" account. For added security, individual details of the account (user ID, password, activation key) may be communicated to them by different channels (e.g. separate letters and/or emails and/or by telephone).

The system may also require re-registration of an existing account in certain circumstances; e.g. where the client terminal suffers a loss of data or the client program is installed on a new terminal.

The same client terminal/program may be used to access a number of accounts belonging to different users. For convenience, the client program may identify each account by the user's name rather than by user ID, so that a user may easily select the account they wish to use.

The system may associate user accounts with certified partners by any convenient mechanism. In the preferred embodiment, the user uses the client program to identify the certified partners that are to be associated with their account. The management server will then inform the relevant certified partners so that documents from those partners can be made available to the user via the system.

Once a client has registered and activated their account, in order to make subsequent use of the services provided by the management agency the client must first log in to the management server. The log in procedure is illustrated in Fig. 2: at 100, the client terminal 12 establishes a connection with the management server 10 and requests a session ID. At 102, a session ID is returned to the client terminal. At 104, the client transmits their log in details (user ID and password and, optionally, any further security information as mentioned above) for authentication by the management agency. At 106, if authentication is successful, the management server transmits a list of documents that are available to the client from any or all of the document servers 14. Otherwise, the connection is terminated and a "bad" log in is documented by the management server.

The client program may also provide an option for an "off-line" log in allowing access to locally stored documents etc. that have previously been retrieved by the client using the system.

Note that the documents identified in the list sent to the client are not stored on the management server 10, but on the document servers 14. The management server may receive details of new documents associated with particular user accounts in any of a variety of ways. In the preferred embodiment, the document servers notify the management server of newly added documents and associated user IDs.

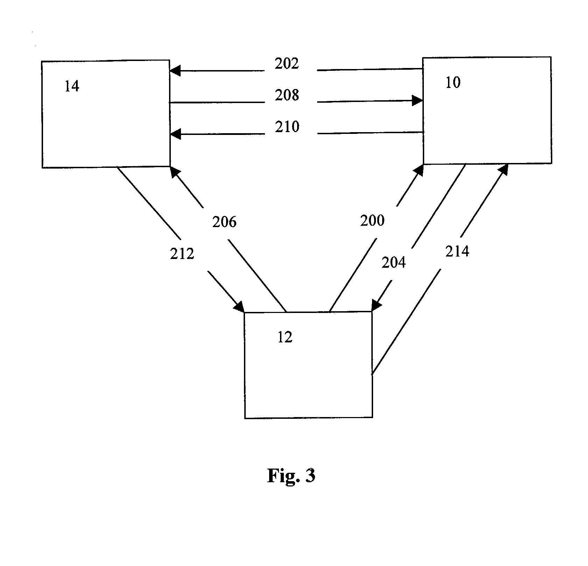

Once the client has logged in and received the document list from the management server 10, the client may request any of the documents in the list. Each document in the list has associated with it a document ID, identifying the particular document, and a document server ID, identifying the particular document server 14 where the document resides. The document request process is illustrated in Fig. 3.

Firstly, at 200, the client terminal 12 transmits a first document request to the management server 10. The first document request includes the current session ID and the relevant document ID and document server ID.

At 202, the management server communicates with the document server 14 identified by the document server ID to authenticate the document server and to confirm that it is available and on-line. If authentication is successful but the document server is unavailable for any reason, an "off-line" message is returned. If authentication fails the connection is terminated and the failure is documented.

At 204, assuming that the document server was successfully authenticated and is on-line, the management server transmits to the client a document session ID and a decryption key.

At 206, the client transmits a second document request to the document server. The second document request includes the client's user ID, the current session ID, the document session ID and the document ID.

At 208, the document server communicates with the management server to authenticate the user ID, session ID, document session ID and document ID received from the client at 206. At 210, the management server validates the second document request and returns an encryption key (matching the decryption key sent to the client in step 204) to the document server. In the event that the second document request is not successfully validated, the management server will return a bad document request message to the document server and the document server will store as much user information as possible for further investigation.

At 212, assuming the second document request was validated, the document server retrieves the document identified by the document ID, encrypts it using the encryption key provided in step 210, and transmits the encrypted document to the client.

The client may then decrypt and view the document, using the decryption key provided in step 204. At 214, the client informs the management server that the document has been viewed so that the management server databases can be updated.

It will be understood that, once the client has logged in to the management agency and received the list of documents, a document may be requested simply by, for example, double-clicking on the corresponding entry on the list, whereafter the request process described above may proceed and return the document to the client for viewing without further user intervention. Once a document has been retrieved by the client, it can be stored locally for future use.

It will be further understood from the foregoing description of the document request process that the management server 10 maintains a document database in which each document stored on each of the document servers is identified by a document ID, with an associated document server ID, at least one associated user ID and a flag indicating whether the document has been viewed by the user. The management server further stores and manages details of certified partners and their associated document servers and manages the allocation of session IDs, document session IDs, encryption keys and decryption keys. Security is enhanced by the document encryption and decryption keys being associated with the user ID, and/or the session ID and/or the document session ID.

The document distribution methods and systems described thus far allow convenient, flexible and secure distribution of documents from businesses to their customers and may also be used for the distribution of documents to multiple users within organisations. Given these secure user-authentication and document distribution functions, the same systems can be extended to provide additional services and functionality to the user base, such as on-line payment of bills distributed using the system.

The authentication processes provided by the system may also be utilised by third party authenticators, enabling clients to access web based services and complete on-line transactions without having to repeatedly log in and provide identical details to many different websites. For example, the management server could provide a web portal whereby the client logs in to the management server and then has access to the services of participating websites without the need for further authentication. Alternatively, the website may communicate with the management server to authenticate information provided directly to it by the user.

Improvements and modifications may be incorporated without departing from the scope of the invention as defined in the appended claims.

## Claims

1. A management server for use in a data communications network for distributing digital documents stored on a plurality of document servers to at least one client terminal, said management server being adapted to:
communicate with said document servers and said client terminal and to store data identifying said documents and their associated document servers and associated clients;
receive and authenticate client log in requests from said client terminal and, in response to an authenticated log in request, to provide said client terminal with a list of documents associated with the authenticated client;
receive first document requests from said client terminal following an authenticated log in, said first document requests identifying documents from said list; and
in response to a first document request, communicate with the document server associated with the requested document and with the client terminal so as to authorise the document server to transmit the requested document to said client terminal.

2. A management server as claimed in claim 1, further adapted, when communicating with said client terminal in response to said first document request, to transmit a document decryption key to said client terminal.

3. A management server as claimed in claim 2, further adapted to associate said decryption key with at least one of a session identifier generated by the management server in response to said log in request and a document session identifier generated by the management server in response to said first document request and to transmit said session identifier and/or said document session identifier to said client terminal.

4. A management server as claimed in claim 3, further adapted to receive from said document server an authentication request indicating that the document server has received from the client terminal a second document request, said second document request requesting the document server to transmit the document identified in the first document request to the client terminal, said authentication request requesting the management server to authenticate the second document request.

5. A management server as claimed in claim 4, further adapted to authenticate said second document request in response to said authentication request and, when the second document request has been authenticated, to transmit a document encryption key, corresponding to said document decryption key, to the document server.

6. A management server as claimed in claim 5, further adapted to associate said encryption key with at least one of said session identifier said document session identifier, said second document request and said authentication request including said session identifier and said document session identifier.

7. A management server as claimed in any preceding claim, further adapted to receive from said client terminal a message indicating that the document identified in said first document request has been received from said document server and to update said stored data relating to that document to indicate that the document has been received by that client.

8. A client terminal for use with a management server as claimed in any preceding claim in a data communications network for distributing digital documents stored on a plurality of document servers to said client terminal, said client terminal being adapted to:
communicate with said management server and said document servers and to receive data identifying said documents and their associated document servers;
transmit said client log in requests to said management server and, in response to an authenticated log in request, to receive from said management server said list of documents;
transmit said first document requests to said management server following an authenticated log in,; and
following a reply from said management server in response to said first document request, communicate with the document server associated with the requested document.

9. A client terminal as claimed in claim 8, further adapted, when communicating with said management server following said first document request, to receive a document decryption key from said management server.

10. A client terminal as claimed in claim 9, further adapted to receive from said management server at least one of a session identifier generated by the management server in response to said log in request and a document session identifier generated by the management server in response to said first document request and to transmit said session identifier and/or said document session identifier to said document server.

11. A client terminal as claimed in claim 10, further adapted to transmit to said document server a second document request, said second document request requesting the document server to transmit the document identified in the first document request to the client terminal.

12. A client terminal as claimed in claim 11, further adapted to receive from said document server an encrypted version of the document identified in said first and second document requests and to decrypt the encrypted document using said decryption key.

13. A client terminal as claimed in any of claims 8 to 12, further adapted to transmit to said management server a message indicating that the document identified in said first document request has been received from said document server.

14. A document server for use with a management server and at least one client terminal as claimed in any preceding claim, in a data communications network for distributing digital documents stored on a plurality of document servers to at least one client terminal, said document server being adapted to:
communicate with said management server and said client terminal and to store said documents and data identifying said documents and their associated clients;
receive second document requests from said client terminal following a client log in authenticated by said management server, said second document requests identifying documents from said list; and
in response to a second document request, communicate with the management server and with the client terminal so as to obtain authorisation from the management server to transmit the requested document to said client terminal.

15. A document server as claimed in claim 14, further adapted to transmit to said management server an authentication request indicating that the document server has received from the client terminal said second document request, said authentication request requesting the management server to authenticate the second document request.

16. A document server as claimed in claim 15, further adapted to receive from said management server, when said second document request has been authenticated by the management server, a document encryption key corresponding to a document decryption key transmitted to the client terminal by the management server.

17. A document server as claimed in claim 16, further adapted to associate said encryption key with at least one of a session identifier and a document session identifier included in said second document request.

18. A data communications network for distributing digital documents, comprising at least one management server, at least one client terminal and a plurality of document servers as claimed in any preceding claim.
